# EUROPÄISCHE PATENTSCHRIFT

(11) **EP 2 210 697 B1**
(45) Veröffentlichungstag und Bekanntmachung des Hinweises auf die Patenterteilung: **06.08.2014**
(21) Anmeldenummer: 10000789.7
(22) Anmeldetag: 27.01.2010
(51) Int. Cl.: B23P 25/00, B29C 44/18

(54) **Verfahren zum spanenden Bearbeiten eines Werkstücks**
Method for machining a workpiece
Procédé d'usinage d'une pièce

(30) Priorität: 27.01.2009 DE 102009006321
(43) Veröffentlichungstag der Anmeldung: 28.07.2010
(73) Patentinhaber: Alvarez Vega, Antonio, 52224 Stolberg (DE)
(72) Erfinder: Alvarez Vega, Antonio, 52224 Stolberg (DE)
(74) Vertreter: Reuther, Martin

(56) Entgegenhaltungen:
- WO-A1-03/004216
- DE-A1- 4 424 452
- DE-A1- 10 220 485
- FR-A1- 2 652 299

## Beschreibung

Die Erfindung betrifft ein Verfahren zum spanenden Bearbeiten eines Werkstücks.

Bekannt sind derartige Verfahren aus der DE 101 33 003 A1, der DD 282 410 A5, der DE 21 04 062 B2, der DE 102 20 485 A1 bzw. aus der WO 2003/004216 A1 oder aus der DE 195 28 429 A1. Hierbei wird vor dem spanenden Bearbeiten ein flüssiges bzw. zähflüssiges Abdichtmedium in Ausnehmungen eingebracht, welches in die Öffnungen und Kanäle des Werkstücks fließt, so dass durch dieses Abdichtmedium verhindert werden kann, dass Späne oder andere Verunreinigungen in derartige Ausnehmungen, wie beispielsweise Kühlkanäle, Schraublöcher oder Zylinder eines Zylinderkopfes, der spanend nachbearbeitet werden soll, eindringen. Nach dem spanenden Bearbeiten kann das eingebrachte Medium durch Erwärmen oder ähnliche Maßnahmen wieder entfernt werden. Diese Vorgehensweise hat insbesondere den Vorteil, dass Späne sich nicht in sehr kleinen Kanälen festsetzen können, aus welchen sie betriebssicher nur unter erheblichem Aufwand entfernt werden können.

Gegebenenfalls kann das Abdichtmedium auch als Kühl- und/oder Schmiermittel für den spanenden Bearbeitungsprozess genutzt werden. Alternativ hierzu wird auch die Verwendung eines entsprechenden Kunststoffes, von Gips oder von Metall vorgeschlagen.

Andererseits schlägt die DE 44 24 452 A1 ein gattungsgemäßes Verfahren vor, bei welchem die Hohlräume des Werkstücks mit einem bei einer für das Werkstück unschädlichen Temperatur schmelzbaren oder sich leicht und rückstandsfrei auflösenden bzw. vergasbaren hart oder halbhart aushärtenden Schaum gefüllt werden. Ist der Schaum hart oder halbhart ausgehärtet, kann in diesem Zustand die spanende Bearbeitung des Hohlkörpers erfolgen, wobei anschließend der sich in den Hohlräumen befindliche Schaum ausgeschmolzen, herausgelöst bzw. durch Vergasen entfernt wird.

Selbiges Verfahren zum Entfernen des eingebrachten Abdichtmittels mittels Vergasung bzw. thermischer Zerlegung schlägt weiterhin die FR 2 652 299 vor, wobei zur Abdichtung ein Schaum eingesetzt wird, welcher jedoch zum Entfernen auf etwa 700°C erhitzt werden muss. Bei derart hohen Temperaturen ist der Schmelzpunkt bei Werkstücken aus beispielsweise Aluminium bereits überschritten.

Während bei letzterem Verfahren die zum Entfernen des Schaums notwendigen Energien bzw. Lösungsmittel verhältnismäßig kostenintensiv sind, erweist sich das zuvor beschriebene Verfahren wegen der hiermit verbundenen Materialmenge an fließfähigem Abdichtmedium als kosten- und zeitaufwendig. Wird zur Kostenreduktion ein zähflüssiges Abdichtmedium genutzt, so gestaltet sich die Prozessführung als äußerst aufwendig, da das zähflüssige Medium gezielt in einen festen Zustand überführt werden muss, wenn nicht erhebliche Mengen an Abdichtmedium gebraucht werden sollen.

Es ist Aufgabe vorliegender Erfindung, ein Verfahren zum spanenden Bearbeiten eines Werkstücks bereitzustellen, bei welchem vor dem spanenden Bearbeiten ein Abdichtmedium in Ausnehmungen eingebracht bzw. vor Ausnehmungen aufgebracht wird und bei welchem die Verfahrenskosten minimiert sind.

Als Lösung schlägt vorliegende Erfindung ein Verfahren mit den Merkmalen des Anspruchs 1 vor.

Zum Beispiel wäre es bei dem Verfahren möglich dass vor dem Ein- bzw. Aufbringen des Abdichtmediums das Werkstück auf mindestens 25 °C temperiert und sowohl das Werkstück als auch das Abdichtmedium auf einen Temperaturunterschied von 30 °C oder weniger temperiert werden. Vorzugsweise beträgt der Temperaturunterschied 25 °C oder weniger, wobei insbesondere das Werkstück auf über 28 °C bzw. auf über 30 °C temperiert werden kann.

In Abweichung vom Stand der Technik, insbesondere zu der DE 44 24 452 A1, ermöglicht eine Temperierung an sich, dass das Abdichtmedium über seine physikalischen Eigenschaften, wie Aggregatzustand und ähnliches, aber auch über seine chemischen Eigenschaften, wie beispielsweise Reaktionsgeschwindigkeiten, hinsichtlich seines Prozessverhaltens geeignet beherrscht werden kann, um beispielsweise die Eindringtiefe in Hohlräume zu bestimmen, wobei die Temperierung sowohl des Werkstücks als auch des Abdichtmediums dafür sorgt, dass Abschreckeffekte, die beispielsweise eine ausreichende Verbindung durch eine ausreichende Benetzung zwischen Abdichtmedium und Werkstück verhindern, vermieden werden können.

Durch eine derartige Verfahrensführung kann mit einem minimalen Volumen an Abdichtmedium ein maximales Abdichtergebnis betriebssicher realisiert werden. Hierbei ermöglicht die gute thermische Kontrolle des Abdichtmediums darüber hinaus, dass das Abdichtmedium betriebssicher auch in tiefe und enge Hohlräume gelangt, sodass auch dann, wenn die spanende Bearbeitung entsprechend tief in derartige Hohlräume eindringen soll, betriebssicher eine Abdichtung gewährleistet ist.

Durch die Temperierung, insbesondere des Abdichtmedium, ist es insbesondere möglich, als Abdichtmedium ein pastöses Abdichtmedium, insbesondere ein Wachs in einem pastösen Zustand, zu nutzen. Hierbei bezeichnet der Begriff "pastös" in vorliegendem Zusammenhang einen Zustand, in welchem ein Medium, insbesondere das Abdichtmedium, zwar streichfähig, also nicht fest, doch über die Dauer des Ein- bzw. Aufbringens hinreichend formstabil ist und insbesondere nicht fließt. Hierbei versteht es sich, dass das entsprechende Abdichtmedium nach dem Ein- bzw. Aufbringen abgekühlt und somit stabilisiert werden kann. Die Stabilisierung kann andererseits auch auf anderem Wege, beispielsweise auf chemische Prozesse, erfolgen. In Abweichung vom Stand der Technik insbesondere nach der DE 101 33 003 A1 bzw. WO 2003/004216 A1 oder nach der DE 195 28 429 A1, bei welchen ein flüssiges Abdichtmedium, möglicherweise ein zähflüssiges Abdichtmedium, zur Anwendung kommt, welches nach wie vor fließt und in seiner fließenden Bewegung nur sehr schwer kontrolliert werden kann, kommt vorliegend ein pastöses Medium vorteilhaft zur Anwendung, welches eigenständig wesentlich Formveränderungen insbesondere über die Dauer des Ein- bzw. Aufbringens nicht vollführt.

Auf diese Weise kann der Gesamtprozess äußerst betriebssicher und reproduzierbar beherrscht werden, sodass das Verfahren mit einem Minimum an Abdichtmedium durchgeführt werden kann.

Zwar kann durch eine geeignete Temperierung, insbesondere auch des Werkstückes, in einer besonders vorteilhaften Ausbildung des erfindungsgemäßen Verfahrens eine ausreichend dichte Verbindung zwischen Werkstück und Abdichtmedium betriebsicher gewährleistet werden. Andererseits versteht es sich, dass ein Verfahren zum spanenden Bearbeiten eines Werkstückes, bei welchem vor dem spanenden Bearbeiten ein Abdichtmedium in Ausnehmung eingebracht bzw. vor Ausnehmungen aufgebracht wird und welches sich dadurch auszeichnet, dass vor dem spanenden Bearbeiten als Abdichtmedium ein pastöses Wachs in Ausnehmungen eingebracht bzw. vor Ausnehmungen aufgebracht wird, auch unabhängig von den übrigen Merkmalen vorliegender Erfindung entsprechend vorteilhaft zur Anwendung kommen kann.

Die Verwendung eines pastösen Mediums ermöglicht es darüber hinaus, dass das Abdichtmedium auf- bzw. eingestrichen wird, um Ausnehmungen bzw. Hohlräume entsprechend abzudichten. Kumulativ bzw. alternativ kann das Abdichtmedium, insbesondere wenn es als pastöses Medium zur Anwendung kommt, als Strang auf- bzw. eingebracht werden. Derartige Verfahrensvorgänge können mit einem pastösen Medium besonders einfach und betriebssicher durchgeführt werden. Derartige Verfahrensführungen, mit welchen ein Abdichtmedium in Ausnehmungen eingebracht bzw. vor Ausnehmungen aufgebracht werden kann, sind in keiner Weise durch den Stand der Technik offenbart, welche lediglich ein Einspritzen des Abdichtmediums in entsprechende Hohlräume darstellen, was für eine betriebssichere Verfahrensführung wesentlich mehr Abdichtmedium benötigt und, insbesondere bei der Verwendung von zähflüssigem Medium, schwer betriebssicher, beispielsweise wegen möglicher Tropfenbildung oder nichtbeherrschbarer Kriechvorgänge, zu kontrollieren ist.

Hierbei ist in vorliegendem Zusammenhang der Begriff "Strang" von anderen, im wesentlichen linear ausgerichteten Ausbildungsformen des Abdichtmediums zu unterscheiden, wenn dieses beispielsweise Kühl- oder Ölkanäle eines Zylinderkopfes eingeführt wurde, was insbesondere auch in völlig flüssigen Zustand durchgeführt wurden sein kann. Zwar hat ein derartig in einen Hohlraum eingebrachtes Arbeitsmedium ein strangartiges Erscheinungsbild. Da jedoch das entsprechende Medium im wesentlichen von einem festen Formkörper, der diesem Medium auch seine äußere Begrenzung im wesentlichen vorgibt, umgeben ist, wird - auch umgangssprachlich - bei einer derartigen Ausformung eines Mediums von einem Strang nicht gesprochen. Ein Strang hat vielmehr weniger als 50 % seiner Oberfläche Kontakt zu einem Festkörper, wobei ein Strang regelmäßig aus einem formbaren Medium, wie einer Flüssigkeit, einem zähflüssigen Medium, einem pastösen Medium oder beispielsweise auch einem aus einem Pulver bzw. einer Schüttung, gebildet sein wird.

Dementsprechend ist ein Verfahren zum spanenden Bearbeiten eines Werkstücks, bei welchem vor dem spanenden Bearbeiten ein Abdichtmedium in Ausnehmungen eingebracht bzw. vor Ausnehmungen aufgebracht wird und welches sich dadurch auszeichnet, dass vor dem spanenden Bearbeiten als Abdichtmedium ein pastöses Wachs in Ausnehmungen eingebracht bzw. vor Ausnehmungen aufgebracht wird. Letzteres gilt auch für ein Verfahren zum spanenden Bearbeiten eines Werkstücks, bei welchem vor dem spanenden Bearbeiten Wachs als ein Abdichtmedium in Ausnehmungen eingebracht bzw. vor Ausnehmungen aufgebracht wird und welche sich dadurch auszeichnet, dass das Abdichtmedium auf- bzw. eingestrichen wird.

Insbesondere bei größeren Ausnehmungen kann das Abdichtmedium sequentiell aufbzw. eingebracht werden, wobei zwei zu voneinander beanstandeten Sequenzen auf- bzw. eingebrachte Abschnitte des Abdichtmediums sich in einer Grenzfläche berühren.

Diese sequenzielle Vorgehensweise ermöglicht es, bei minimalem Materialaufwand und somit entsprechend niedrigen Kosten auch unabhängig von den übrigen Merkmalen vorliegender Erfindung bei einem Verfahren zum spanenden Bearbeiten eines Werkstücks, bei welchem vor dem spanenden Bearbeiten ein Abdichtmedium in die Ausnehmungen eingebracht bzw. vor Ausnehmungen aufgebracht wird, derartige Ausnehmungen abzudichten. Hierbei können durch das sequentielle Auf- bzw. Einbringen separate Verfesrigungsschritte durchgeführt werden, durch welche größere Ausnehmungen eigenstabil durch das Abdichtmedium überbrückt werden können, auch wenn die Stärke des Abdichtmediums in fließfähigem bzw. pastösem Zustand eine nicht ausreichende Eigenstabilität aufweisen würde, um eine derartige Ausdehnung zu überbrücken.

Beispielsweise können zwei sich berührende Abschnitte des Abdichtmediums aus demselben Material gebildet sein. Letzteres kann beispielsweise dadurch umgesetzt werden, dass zunächst ein Strang bzw. eine bestimmte Menge an Arbeitsmedium an dem Rand einer Ausnehmung angebracht wird, wobei das Abdichtmedium in die Ausnehmung kragt. In einer zweiten Sequenz kann dann an anderer Stelle an dem Rand bzw. an dem möglicherweise leicht ausgehärteten bereits angebrachten Abdichtmedium ein weiterer Abschnitt angebracht werden, der über eine Grenzfläche mit dem bereits vorhandenen Abdichtmedium eine Gesamtabdichtung bildet.

Hierbei versteh es sich, dass die voneinander beabstandeten Sequenzen völlig voneinander getrennt durchgeführt werden können, indem beispielsweise zunächst eine erste bestimmte Menge Abdichtmedium an den Rand einer Ausnehmung angebracht wird, während nach einer kurzen Wartezeit eine zweite dementsprechend in einer zweiten Sequenz aufgebracht werden kann. Andererseits ist es auch möglich, dass die beiden Sequenzen zwar voneinander Zeitlich beabstandet sind, dass jedoch zwischen diesen beiden Sequenzen kontinuierlich Abdichtmedium an- bzw. eingebracht wird, was beispielsweise dadurch geschehen kann, dass ein kreisförmiger Strang um den Rand einer Ausnehmung gelegt wird, wobei Anfang und Ende des Strangs sich an einer Grenzfläche einander berühren, jedoch zu verschiedenen Zeitpunkten bzw. Sequenzen, die zeitlich diskret voneinander beabstandet sind, auf- bzw. eingebracht wurden.

Kumulativ bzw. alternativ zur Verwendung eines einzigen Materials zur Bildung der sich berührenden Abschnitte, können wenigstens zwei sich berührende Abschnitte des Abdichtmediums aus unterschiedlichen Materialien gebildet sein. So ist es beispielsweise denkbar, einen festen Deckel, beispielsweise aus ausgehärtetem Abdichtmedium oder auch aus Kunststoff oder ähnlichem, über ein pastöses Abdichtmedium in einer Ausnehmung zu befestigen, um auf diese Weise die Ausnehmung abzudichten. Eine derartige Vorgehensweise kann je nach konkreter Ausgestaltung des Verfahrens sehr zeitsparend sein. Darüber hinaus kann diese Weise die Menge an pastösem Abdichtmedium minimiert werden, wenn es gelingt, den Abschnitt des Abdichtmediums, der aus einem anderen Material gebildet ist, separat zu entfernen und gegebenenfalls wieder zu verwenden.

Vorzugsweise wird das einzubringende Abdichtmedium vor dem Ein- bzw. Aufbringen durch Erwärmen gegenüber Raumtemperatur in einen pastösen Zustand überführt. Dieses bedingt die vorstehend bereits erläuterten Vorteile hinsichtlich der Verwendung eines pastösen Mediums als Abdichtmedium während des Auf- bzw. Einbringens. Andererseits kann, wenn das Werkstück selbst sowie der dieses Werkstück umgebende Raum eine niedrigere Temperatur aufweisen, das Abdichtmedium nach dem Ein- bzw. Aufbringen sich thermisch verfestigen, sodass eine weitere Bearbeitung des Werkstücks ohne weiteres möglich ist.

Je nach konkreter Wahl des Abdichtmediums kann dieses auch als Kühl- und/oder Schmiermittel genutzt werden, insbesondere wenn im Bereich der Abdichtung eine spanende Bearbeitung vorgenommen werden soll. Hierbei kann die durch das spanende Bearbeiten bedingte Temperaturerhöhung zur Verflüssigung des Abdichtmediums genutzt werden, so das dieses als Kühl- und/oder Schmiermittel zur Verfügung steht. Diese Vorgehensweise birgt jedoch das nicht unerhebliche Risiko, dass das Erwärmen auch anderer nicht spanend bearbeitete Bereiche des Werkstücks erreicht und die Abdichtung auch dort schmilzt, was lediglich durch eine größere Menge an Abdichtmedium betriebssicher vermieden werden kann, und stellt darüber hinaus äußerst hohe Anforderungen an das als Abdichtmedium gewählte Material, da dieses neben den für das Abdichtmedium notwendige Materialeigenschaften auch noch Kühl- bzw. Schmiereigenschaften aufweisen muss.

Aus diesem Grunde ist es vorteilhaft, wenn während des spanenden Bearbeitens ein von dem Abdichtmedium abweichendes Kühl- und/oder Schmiermittel auf das Werkstück oder auf ein Werkzeug aufgebracht wird. Diese Kühl- und/oder Schmiermittel kann einerseits für seine Aufgabe optimiert werden und andererseits auch zum Abspülen von Spänen genutzt werden.

Vorzugsweise erfolgt vor dem Entfernen des auf- bzw. eingebrachten Abdichtmediums eine Vorreinigung, insbesondere ohne wesentliches Entfernen des auf- bzw. eingebrachten Abdichtmediums. Bei einer derartigen Vorreinigung, können insbesondere Späne aber auch andere Verunreinigungen, wie beispielsweise Kühl- oder Schmiermittelreste bzw. Abrieb, von dem Werkstück und/oder von der Oberfläche des Abdichtmediums entfernt werden. Eine derartige Vorreinigung kann beispielsweise mechanisch, durch Pressluft oder auch durch Wasser bzw. ein geeignetes Lösungsmittel erfolgen. Durch eine derartige Vorreinigung kann effektiv verhindert werden, dass etwaige Verunreinigungen trotz des Abdichtmediums in die entsprechend abgedichteten Ausnehmungen gelangen, wenn das Abdichtmedium entfernt wird.

Für die Vorreinigung kann gegebenenfalls als Lösungsmittel auch ein handelsüblicher Haushaltsreiniger bzw. ein Reiniger mit einer Zusammensetzung, die einem handelsüblichen Haushaltsreiniger entspricht, zur Anwendung kommen.

Nach dem Bearbeiten des Werkstücks, insbesondere nach der Vorreinigung, kann zumindest ein Teil des auf- bzw. eingebrachten Abdichtmediums in festem oder pastösem Zustand durch Abtragen entfernt werden. Dieses kann beispielsweise durch einen entsprechenden Schaber, durch die Einwirkung von Pressluft oder durch sonstige mechanische Einwirkung erfolgen. Auf diese Weise kann ein Energieeinsatz bzw. die Menge an benötigtem Reinigungsmittel minimiert werden. Darüber hinaus ist ein Recycling zumindest von Teilen des Abdichtmediums wesentlich einfacher möglich. Dieses gilt insbesondere dann, wenn beispielsweise das Abdichtmediums feste Bestandteile, zum Beispiel in Form von festen Formkörpern, die möglicherweise aus Kunststoff oder ähnlichem gebildet sind, aufweist. Derartige Formkörper können in einem derartigen Arbeitsschritt einfach mechanisch entfernt, gegebenenfalls gereinigt und dann wieder verwendet werden.

Andererseits versteht es sich, dass kumulativ bzw. alternativ hierzu das auf- bzw. eingebrachte Abdichtmedium nach dem Bearbeiten entfernt werden kann, indem zumindest ein Teil des Abdichtmediums zum Entfernen verflüssigt wird. Letzteres kann beispielsweise durch eine entsprechende Temperierung erfolgen. Andrerseits können auch geeignete Lösungsmittel zur Anwendung kommen. In diesem Zusammenhang versteht es sich, dass gegebenenfalls Teile des Abdichtmediums auch verglast werden können.

Je nach konkreter Ausgestaltung kann die verflüssigte Entfernung des Abdichtmediums zweistufig erfolgen, indem einerseits eine thermische Verflüssigung erfolgt, die beispielsweise ein Abfließen des Abdichtmediums bedingt, und andererseits ein entsprechendes Lösungsmittel, beispielsweise ein handelsüblicher Neutralreiniger, zur Anwendung kommt.

Vorzugsweise kommt als Abdichtmedium ein pflanzliches und/oder ein von pflanzlicher Basis aus modifiziertes Wachs zur Anwendung, wobei es sich versteht, dass die Verwendung eines derartigen Wachses als Abdichtmedium zum Abdichten von Ausnehmungen bei der spanenden Bearbeitung auch unabhängig von den übrigen Merkmalen vorliegender Erfindung vorteilhaft ist.

Derartige Wachse ermöglichen überraschender Weise in der Auswahl aus allen möglichen Materialien, die bei gut beherrschbaren Betriebstemperaturen zähflüssig bzw. pastös sind, gute Vorformungseigenschaften, sodass das Wachs äußerst betriebssicher auch bei komplexer geformten Ausnehmungen an- bzw. eingebracht werden kann.

Als besonders vorteilhaft hat sich Montanwachs bzw. Montanesterwachs erwiesen, da dieses auch bei den verfahrensgemäß erwarteten Temperaturschwankungen eine ausreichende Dichtigkeit, sowohl in sich als auch mit dem Werkstück, gewährleisten kann. Insbesondere kann derartiges Wachs auch aus einer Düse zu einem Strang gepresst werden, was eine besonders vorteilhafte Verfahrensfiihrung erlaubt.

Vorzugsweise weißt das Abdichtmedium einen Schmelzpunkt unter 60 °C auf. Auf diese Weise können die benötigten Energien auf ein Minimum begrenzt werden.

Derartige Wachse ermöglichen es darüber hinaus wegen ihres verhältnismäßig Schwindungsverhaltens bei einer Temperatursenkung, dass das Material im pastösem Zustand aus- bzw. eingebracht werden kann, ohne dass es sich bei einem Erkalten von dem zu bearbeitenden Werkstück löst bzw. Risse in dem Wachs entstehen.

Der Tropfpunkt des Abdichtmediums wird vorzugsweise derart gewählt, dass er kleiner gleich 58 °C ist. Auf diese Weise ist sichergestellt, dass das Abdichtmedium ausreichend flexibel auch bei niedrigeren Temperaturen an ein Werkstück angebracht bzw. in Ausnehmungen eingebracht werden kann, sodass insbesondere das Werkstück nicht zu sehr erwärmt werden muss, wenn auf einem temperierten Temperaturgradient zwischen Abdichtmedium und Werkstück geachtet werden soll.

Andererseits ist es von Vorteil, wenn das Abdichtmedium einen Tropfpunkt größer gleich 55 °C aufweist, sodass es in sich ausreichend eigenstabil ist, bis die Temperaturen herabgesenkt werden.

Darüber hinaus hat sich herausgestellt, dass das Abdichtmedium vorzugsweise bei Temperaturen von 50°C oder kleiner fest sein sollte, sodass auch bei einer deutlichen Erwärmung des Werkstückes während des spanenden Bearbeitens eine ausreichende Abdichtung bzw. eine ausreichende Stabilität der Abdichtung gewährleistet werden kann.

Die Temperaturpunkte von Schmelzpunk, Tropfpunkt bzw. Festigkeitspunkt des Abdichtmediums können mit an sich im Stand der Technik hinreichend bekannten Verfahren eingestellt werden. Insbesondere zählt hierzu eine geeignete Materialzusammensetzung der jeweiligen Abdichtmedien. Dieses gilt auch für Wachse, deren physikalische Eigenschaften beispielsweise durch eine Mischung verschiedener Wachse geeignet gewählt werden können, wobei es sich - wie bereits vorstehend erläutert wurde - als vorteilhaft erwiesen hat, zumindest einen nennenswerten Anteil an Montanwachs bzw. Montanesterwachs zu verwenden.

Weitere Vorteile, Ziele und Eigenschaften vorliegender Erfindung werden anhand nachfolgender Beschreibung anliegender Zeichnung erläutert, in welcher beispielhaft und schematisch ein erfindungsgemäßer Verfahrensablauf dargestellt ist. In der Zeichnung zeigen:
- Figur 1: einen vor einer spanenden Bearbeitung abzudichtenden Zylinderblock in schematischer Aufsicht; und
- Figur 2: den Zylinderblock nach Figur 1 in teilweise abgedichtetem Zustand.

Bei dem in der Zeichnung dargestellten Zylinderblock 1, welcher als Gussteil nachträglich an ausgewählten Stellen einer spanenden Bearbeitung unterzogen werden muss, liegen verschiedene Ausnehmungen 2 (lediglich exemplarisch beziffert) vor, die im Endzustand beispielsweise Zylinder 3, Kühlwasseröffnungen 4, Ölversorgungskanäle 5 bzw. Gewindelöcher 6 (lediglich exemplarisch beziffert) darstellen. So werden beispielsweise die Zylinder 3 in den Bereichen, in welchen später der Kolbendichtring anliegt, spanend nachbearbeitet, indem dort eine möglichst glatte Oberfläche mittels eines Fräßkopfes erzeugt wird, wobei - je nach konkreter Umsetzung - die entsprechende Ausnehmung 2 des jeweiligen Zylinders 3 nicht zur Gänze durchgehend derart bearbeitet werden muss. Auch ein Oberflächenbereich 7 des Zylinderblocks 1 wird nachträglich plan gefräst, um eine Dichtfläche gegen den nachträglich aufzusetzenden Zylinderkopf (nicht dargestellt) bereit zu stellen. Die Kühlwasseröffnungen 4 und Ölversorgungskanäle 5 benötigen in der Regel eine spanende Nachbearbeitung nicht. Dieses gilt andererseits nicht für die Gewindelöcher 6, die auf das notwendige Maß aufgebohrt und mittels eines Gewindeschneiders mit einem Gewinde versehen werden müssen.

Bei der spanenden Bearbeitung fallen Späne an, die insbesondere in kleinere Ausnehmungen 2 eindringen und aus diesen nicht bzw. nur sehr schwer entfernt werden können. Um diese zu verhindern werden die Ausnehmungen 2 bei vorliegendem Ausführungsbeispiel mittels eines Wachses, welches überwiegend aus Montanwachs und Montanesterwachs besteht, verschlossen. Durch Beigabe weiterer Wachse, wie insbesondere weiterer pflanzlicher Wachse sowie insbesondere weiterer chemisch modifizierter Wachse, also Hartwachse, und weiterer Zusatzstoffe ist das Wachs hinsichtlich seines Temperaturverhaltens in an sich bekannter Weise derart abgestimmt, das es einen Schmelzpunkt von ungefähr 62 °C und einen Tropfpunkt von ungefähr 56 °C aufweist. Auch ist die Abstimmung derart gewählt, dass das Wachs bei 48 °C bereits fest ist.

Vor dem An- bzw. Einbringen des Wachses wird dieses auf 53 °C bis 54 °C erwärmt, sodass es als pastöses Medium vorliegt. Darüber hinaus wird der Zylinderblock 1 auf ungefähr 34 °C erwärmt.

Anschließen wird das Wachs mittels einer Düse, welche an eine Roboterarm oder einem sonstigen Manipulator befestigt ist, strangförmig an den gewünschten Stellen des Zylinderblocks auf- bzw. eingebracht.

Aufgrund des gewählten Temperaturfensters härtet das Wachs verhältnismäßig schnell aus, wobei durch die gewählte Auftragstemperatur ein Fließen während des Aufbringens- bzw. Einbringens bis zum Erhärten ausgeschlossen ist.

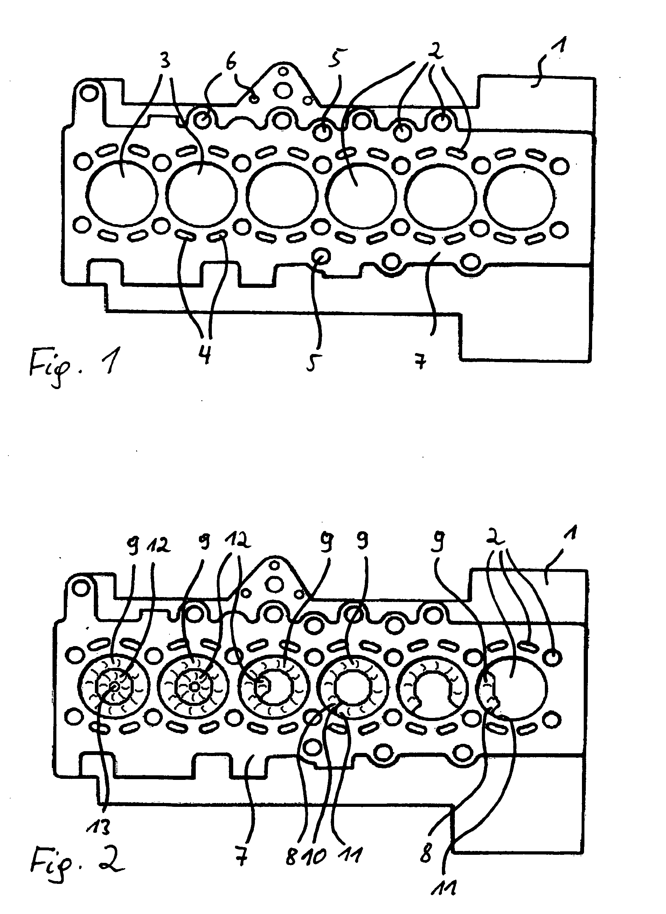

Zum Abdichten der größeren Ausnehmungen 2, wie sie beispielsweise durch die Zylinder 3 bedingt sind, wird das Wach in mehreren Sequenzen in die entsprechende Ausnehmung 2 eingebracht, wie dieses in Figur 2 exemplarisch dargestellt ist. So wird, von einem Ausgangspunkt 8 ausgehend, zunächst ein Strang 9 des Wachses in die jeweilige Ausnehmung 2 eingebracht bis sich der Strang 9 kreisförrnig am Rand der Ausnehmung 2 erstreckt und sich am Ausgangspunkt 8 über eine Grenzfläche 10 schließt, wie dieses anhand der drei rechten Zylinder 3 in Figur 2 sequenziell beispielhaft dargestellt ist. An der Grenzfläche 10 berühren sich somit der zunächst im Bereich des Ausgangspunks 8 eingebrachte Abschnitt des Wachses und das Wach, welches in einer abschließenden Sequenz am Endpunkt 11 eingebracht wurde. Die verbleibende Öffnung wird, wie ebenfalls in Figur 2 schematisch angedeutet, mit einem zweiten Strang 12 verkleinert, um abschließend mittels eines punkformigen Stranges 13 vollständig verschlossen zu werden (vergleiche linker Zylinder in Figur 2).

Zwischen den Strängen 9, 12 und 13 werden hierbei unmittelbar weitere Grenzflächen 14 und 15 zwischen Abschnitten des Abdichtmediums gebildet, die zu voneinander beabstandeten Sequenzen eingebracht wurden. Es versteht sich, dass auf diese Weise nahezu beliebig große Ausnehmungen, die nahezu beliebige Formen aufweisen können, sequenziell abgedichtet werden können. darüber hinaus ist es unmittelbar ersichtlich, dass statt der Verwendung eines identischen Abdichtmediums für die vorstehend beschriebenen Sequenzen auch verschiedene Abdichtmedien zur Anwendung kommen können. So kann beispielweise ein kreisscheibenförmiger Kunststoffdeckel, dessen Durchmesser deutlich geringer ist als der Durchmesser des jeweiligen Zylinders 3, in eine zentrale Position gebracht und mittels des pastösen Wachses dichtend an den Zylinderblock 1 befestigt werden.

Nachdem alle Ausnehmungen 2 in gewünschter Weise abgedichtet wurden sind, können die spanenden Bearbeitungsvorgänge durchgeführt werden. Hierbei versteht es sich, dass je nach konkreter Ausgestaltung des Bearbeitungsverfahrens auch Anteile des Abdichtmediums abgetragen werden können, solange die eigentliche Dichtfunktion gewährleistet ist.

Anschließend erfolgt eine Vorreinigung, indem der Zylinderblock 1 mit Wasser, in welchem Haushaltsreiniger gelöst ist, abgespült wird. Hierbei wird sichergestellt, dass keine Späne an bzw. in dem Zylinderblock verleiben.

Danach wird das Wachs entfernt, wobei je nach konkreter Verfahrensführung gegebenenfalls ein mechanisches Abtragen des Wachses sowie ein mechanisches Entfernen etwaiger Kunststoffscheiben oder ähnlichen erfolgen kann. Im Anschluss hieran wird die Temperatur auf 65 °C angehoben, sodass das Wachs in Schmelze übergeht und mittels eines Lösungsmittels, beispielsweise mittels Neutralreiniger, endgültig entfernt werden kann. Hierbei ist unmittelbar ersichtlich, dass sie erforderliche Energie zum Verflüssigen des Wachses durch den mechanischen Abtrag bei geeigneter Verfahrensführung minimiert werden kann. Erfolgt andererseits die Erwärmung des Wachses über den Zylinderblock 1, so kann auf eine vollständige Verflüssigung des Wachses verzichtet werden, wenn dieses an den Grenzflächen zwischen Zylinderblock 1 und Wachs verflüssigt, sodass das Wachs von sich aus aus den Ausnehmungen heraus fällt, ohne vollständig in die Schmelze übergegangen zu sein.

Durch das Lösungsmittel, was gegebenenfalls auch in einem separaten Schritt nachfolgend zu einer Erwärmung zur Anwendung kommen kann, werden Wachsreste betriebssicher entfernt, sodass die Weiterberarbeitung des spanend bearbeiteten Zylinderblocks 1 ohne weiteres erfolgen kann.

### Bezugszeichen:

- 1: Zylinderblock
- 2: Ausnehmung
- 3: Zylinder
- 4: Kühlwasseröffnungen
- 5: Ölversorgungskanal
- 6: Gewindeloch
- 7: Oberflächenbereich
- 8: Ausgangpunkt

- 9: Strang
- 10: Grenzfläche
- 11: Endpunkt
- 12: Strang
- 13: Strang
- 14: Grenzfläche
- 15: Grenzfläche

## Patentansprüche

1. Verfahren zum spanenden Bearbeiten eines Werkstücks, bei welchem vor dem spanenden Bearbeiten ein Abdichtmedium in Ausnehmungen (2) des Werkstückes (1) eingebracht bzw. vor Ausnehmungen (2) des Werkstückes (1) aufgebracht wird, **dadurch gekennzeichnet, dass** vor dem spanenden Bearbeiten als Abdichtmedium ein pastöses Wachs, also ein zwar streichfähig, also nicht festes, doch über die Dauer des Ein- bzw. Aufbringens hinreichend formstabiles und insbesondere nicht fließendes Wachs, in die Ausnehmungen (2) des Werkstückes (1) eingestrichen oder als Strang (9, 12, 13) eingebracht bzw. vor den Ausnehmungen (2) des Werkstückes (1) aufgestrichen oder als Strang (9, 12, 13) aufgebracht wird.

2. Verfahren nach Anspruch 1, **dadurch gekennzeichnet, dass** vor dem Ein- bzw. Aufbringen des Abdichtmediums das Werkstück (1) auf mindestens 25 °C temperiert und sowohl das Werkstück (1) als auch das Abdichtmedium auf einen Temperaturunterschied von 30 °C oder weniger temperiert werden.

3. Verfahren nach Anspruch 2, **dadurch gekennzeichnet, dass** das Werkstück (1) und das Abdichtmedium auf einen Temperaturunterschied von 25 °C oder weniger temperiert werden.

4. Verfahren nach einem der Ansprüche 1 bis 3, **dadurch gekennzeichnet, dass** der Strang (9, 12, 13) mit seiner Oberfläche zu weniger als 50% mit dem Werkstück (1) in Kontakt steht.

5. Verfahren nach einem der vorstehenden Ansprüche, **dadurch gekennzeichnet, dass** das Abdichtmedium sequentiell auf- bzw. eingebracht wird und zwei zu voneinander beabstandeten Sequenzen auf- bzw. eingebrachte Abschnitte des Abdichtmediums sich an einer Grenzfläche (10, 14, 15) berühren.

6. Verfahren nach Anspruch 5, **dadurch gekennzeichnet, dass** wenigstens zwei sich berührende Abschnitte des Abdichtmediums aus demselben Material gebildet sind.

7. Verfahren nach Anspruch 5 oder 6, **dadurch gekennzeichnet, dass** wenigstens zwei sich berührende Abschnitte des Abdichtmediums aus unterschiedlichen Materialien gebildet sind.

8. Verfahren nach Anspruch 7, **dadurch gekennzeichnet, dass** eines der Materialien in festem Zustand als Abdichtmedium auf- bzw. eingebracht wird.

9. Verfahren nach einem der vorstehenden Ansprüche, **dadurch gekennzeichnet, dass** das einzubringende Abdichtmedium vor dem Ein- bzw. Aufbringen durch Erwärmen gegenüber Raumtemperatur in einen pastösen Zustand überführt wird.

10. Verfahren nach einem der vorstehenden Ansprüche, **dadurch gekennzeichnet, dass** während des spanenden Bearbeitens Kühl- und/oder Schmiermittel auf das Werkstück (1) oder auf ein Werkzeug aufgebracht wird.

11. Verfahren nach einem der vorstehenden Ansprüche, **dadurch gekennzeichnet, dass** nach dem Bearbeiten zumindest ein Teil des auf- bzw. eingebrachten Abdichtmediums in festem oder pastösem Zustand durch Abtragen entfernt wird.

12. Verfahren nach einem der vorstehenden Ansprüche, **dadurch gekennzeichnet, dass** das auf- bzw. eingebrachte Abdichtmedium nach dem Bearbeiten entfernt wird, indem zumindest ein Teil des Abdichtmediums zum Entfernen verflüssigt wird.

13. Verfahren nach Anspruch 11 oder 12, **dadurch gekennzeichnet, dass** vor dem Entfernen des auf- bzw. eingebrachten Abdichtmediums eine Vorreinigung, ohne wesentliches Entfernen des auf- bzw. eingebrachten Abdichtmediums erfolgt.

14. Verfahren nach einem der vorstehenden Ansprüche, **dadurch gekennzeichnet, dass** als Abdichtmedium ein pflanzliches und/oder ein von pflanzlicher Basis aus modifiziertes Wachs genutzt wird.

15. Verfahren nach Anspruch 14, **dadurch gekennzeichnet, dass** das Wachs Montanwachs und/oder Montanesterwachs umfasst.

16. Verfahren nach Anspruch 14 oder 15, **dadurch gekennzeichnet, dass** das Abdichtmedium einen Schmelzpunkt unter 60 °C aufweist.

17. Verfahren nach einem der Ansprüche 14 bis 16, **dadurch gekennzeichnet, dass** das Abdichtmedium einen Tropfpunkt kleiner gleich 58 °C aufweist.

18. Verfahren nach einem der Ansprüche 14 bis 17, **dadurch gekennzeichnet, dass** das Abdichtmedium einen Tropfpunkt größer gleich 55 °C aufweist.

19. Verfahren nach einem der Ansprüche 14 bis 17, **dadurch gekennzeichnet, dass** das Abdichtmedium bei Temperaturen von 50 °C oder kleiner fest ist.

## Claims

1. A method for machining a workpiece, in which a sealing medium is introduced into recesses (2) in the workpiece (1) and/or applied over the recesses (2) in the workpiece (1) before the machining operation, **characterised in that** a paste-like, that is to say spreadable, non-solid wax that nevertheless remains sufficiently dimensionally stable for the duration of the introduction and/or application, and which in particular is not flowable, is spread into the recesses (2) of the workpiece (1) or introduced as a filament (9, 12, 13) into said recesses, or spread over the recesses (2) of the workpiece (1) or applied as a filament (9, 12, 13) over said recesses as the sealing medium prior to the machining operation.

2. The method according to claim 1, **characterised in that** the temperature of the workpiece (1) is adjusted to at least 25 °C before the introduction and/or application of the sealing medium, and the temperatures of both the workpiece (1) and the sealing medium are adjusted so that the difference between them is 30 °C or less.

3. The method according to claim 2, **characterised in that** the temperatures of the workpiece (1) and the sealing medium are adjusted so that the difference between them is 25 °C or less.

4. The method according to any one of claims 1 to 3, **characterised in that** less than 50% of the surface of the filament (9, 12, 13) is in contact with the workpiece (1).

5. The method according to any one of the preceding claims, **characterised in that** the sealing medium is applied or introduced sequentially, and two sections of the sealing medium that are applied or introduced in separate sequences are in contact with each other at a boundary surface (10, 14, 15).

6. The method according to claim 5, **characterised in that** at least two sections of the sealing medium that are in contact with each other are made from the same material.

7. The method according to either of claims 5 or 6, **characterised in that** at least two sections of the sealing medium that are in contact with each other are made from different materials.

8. The method according to claim 7, **characterised in that** one of the materials is applied or introduced as the sealing medium in the solid state.

9. The method according to any one of the preceding claims, **characterised in that** the sealing medium to be introduced is brought into a paste-like state by heating with respect to room temperature before the introduction and/or application.

10. The method according to any one of the preceding claims, **characterised in that** cooling and/or lubricating agents are poured onto the workpiece (1) or a tool during the machining operation.

11. The method according to any one of the preceding claims, **characterised in that** after machining at least some of the applied or introduced sealing medium is removed in the solid or paste-like state by abrasion.

12. The method according to any one of the preceding claims, **characterised in that** the applied or introduced sealing medium is removed after machining by liquefying at least some of the sealing medium to facilitate its removal.

13. The method according to either of claims 11 or 12, **characterised in that** a precleaning step, without significant removal of the applied or introduced sealing medium, is carried out prior to the removal of the applied or introduced sealing medium.

14. The method according to any one of the preceding claims, **characterised in that** a vegetable wax and/or a wax modified from a vegetable base used as the sealing medium.

15. The method according to claim 14, **characterised in that** the wax contains montan wax and/or montan ester wax.

16. The method according to either of claims 14 or 15, **characterised in that** the sealing medium has a melting point below 60 °C.

17. The method according to any one of claims 14 to 16, **characterised in that** the sealing medium has a drop point equal to or lower than 58 °C.

18. The method according to any one of claims 14 to 17, **characterised in that** the sealing medium has a drop point equal to or higher than 55 °C.

19. The method according to any one of claims 14 to 17, **characterised in that** the sealing medium is solid at temperatures of 50 °C or below.

## Revendications

1. Procédé d'usinage par enlèvement de copeaux d'une pièce d'oeuvre, lors duquel, avant l'usinage par enlèvement de copeaux, on introduit un milieu d'étanchéité dans des évidements (2) de la pièce d'oeuvre (1) ou on l'applique à l'avant d'évidements (2) de la pièce d'oeuvre (1), **caractérisé en ce qu'**avant l'usinage par enlèvement de copeaux, on passe dans les évidements (2) de la pièce d'oeuvre (1) ou on introduit en cordon (9, 12, 13) ou on enduit à l'avant d'évidements (2) de la pièce d'oeuvre (1) ou on applique en cordon (9, 12, 13) en tant que milieu d'étanchéité une cire pâteuse, donc une cire bien que facile à étaler, donc non solide, pourtant à forme suffisamment stable sur la durée de l'introduction ou de l'application et particulièrement non fluide.

2. Procédé selon la revendication 1, **caractérisé en ce qu'**avant l'introduction ou l'application du milieu d'étanchéité, on tempère la pièce d'oeuvre (1) à au moins 25° C et on tempère aussi bien la pièce d'oeuvre (1) que le milieu d'étanchéité à une différence de température de 30° C ou moins.

3. Procédé selon la revendication 2, **caractérisé en ce qu'**on tempère la pièce d'oeuvre (1) et le milieu d'étanchéité à une différence de température de 25° C ou moins.

4. Procédé selon l'une quelconque des revendications 1 à 3, **caractérisé en ce que** par sa surface, le cordon (9, 12, 13) est en contact à moins de 50 % avec la pièce d'oeuvre (1).

5. Procédé selon l'une quelconque des revendications précédentes, **caractérisé en ce qu'**on applique ou on introduit le milieu d'étanchéité de manière séquentielle et **en ce que** deux parties du milieu d'étanchéité appliquées ou introduites à des séquences distancées l'une de l'autre se touchent sur une surface limite (10, 14, 15).

6. Procédé selon la revendication 5, **caractérisé en ce qu'**au moins deux parties du milieu d'étanchéité qui se touchent sont formées dans la même matière.

7. Procédé selon la revendication 5 ou 6, **caractérisé en ce qu'**au moins deux parties du milieu d'étanchéité qui se touchent sont formées dans des matières différentes.

8. Procédé selon la revendication 7, **caractérisé en ce qu'**on applique ou on introduit l'une des matières à l'état solide en tant que milieu d'étanchéité.

9. Procédé selon l'une quelconque des revendications précédentes, **caractérisé en ce qu'**avant l'introduction ou l'application, par échauffement par rapport à la température ambiante, on transfère le milieu d'étanchéité à introduire dans un état pâteux.

10. Procédé selon l'une quelconque des revendications précédentes, **caractérisé en ce que** pendant l'usinage par enlèvement de copeaux, on applique un agent réfrigérant et/ou lubrifiant sur la pièce d'oeuvre (1) ou sur un outil.

11. Procédé selon l'une quelconque des revendications précédentes, **caractérisé en ce qu'**après l'usinage, on retire par enlèvement au moins une partie du milieu d'étanchéité appliqué ou introduit à l'état solide ou pâteux.

12. Procédé selon l'une quelconque des revendications précédentes, **caractérisé en ce qu'**on retire le milieu d'étanchéité appliqué ou introduit après l'usinage, **en ce qu'**on liquéfie au moins une partie du milieu d'étanchéité pour le retrait.

13. Procédé selon la revendication 11 ou 12, **caractérisé en ce qu'**avant le retrait du milieu d'étanchéité appliqué ou introduit, il est procédé à un nettoyage préalable sans retrait majeur du milieu d'étanchéité appliqué ou introduit.

14. Procédé selon l'une quelconque des revendications précédentes, **caractérisé en ce qu'**on utilise en tant que milieu d'étanchéité une cire végétale et/ou modifiée à partir d'une base végétale.

15. Procédé selon la revendications 14, **caractérisé en ce que** la cire englobe de la cire de lignite ou de la cire d'ester montanique.

16. Procédé selon la revendication 14 ou 15, **caractérisé en ce que** le milieu d'étanchéité présente un point de fusion inférieur à 60°C.

17. Procédé selon l'une quelconque des revendications 14 à 16, **caractérisé en ce que** le milieu d'étanchéité présente un point de goutte inférieur ou égal à 58° C.

18. Procédé selon l'une quelconque des revendications 14 à 17, **caractérisé en ce que** le milieu d'étanchéité présente un point de goutte supérieur ou égal à 55° C.

19. Procédé selon l'une quelconque des revendications 14 à 17, **caractérisé en ce que** le milieu d' étanchéité est solide à des températures de 50° C ou inférieures.
